# EUROPÄISCHE PATENTANMELDUNG

(11) **EP 4 659 625 A2**
(43) Veröffentlichungstag der Anmeldung: **10.12.2025**
(21) Anmeldenummer: 25196645.3
(22) Anmeldetag: 15.03.2022
(51) Int. Cl.: A46D 3/00

(54) **VERFAHREN ZUR HERSTELLUNG EINER REINIGUNGSVORRICHTUNG UND REINIGUNGSVORRICHTUNG**

(30) Priorität: 17.03.2021 DE 102021202595
(62) Teilanmeldung aus: 22714830.1
(71) Anmelder: TePe Munhygienprodukter AB, 213 76 Malmö (SE)
(72) Erfinder: BAHLMANN, Louis, 50829 Köln (DE)
(74) Vertreter: Ström & Gulliksson AB

(57) **Zusammenfassung**

Die vorliegende Erfindung betrifft ein Verfahren zur Herstellung einer Reinigungsvorrichtung, insbesondere einer Interdental-Reinigungsvorrichtung, mit folgenden Verfahrensschritten:
a. Ausbilden eines Griffelements (2) aus einem Faserwerkstoff, insbesondere aus Papier oder Karton,
b. Bereitstellen eines Reinigungselements (3), das zumindest ein Filament (5) umfasst,
c. Anordnen zumindest eines Abschnitts (5.1) des zumindest einen Filaments (5) des Reinigungselements (3) in einem Aufnahmeabschnitt (2.1) des Griffelements (2),
d. Verbinden des Reinigungselements (3) mit dem Griffelement (2)durch
i. Pressen des Aufnahmeabschnitts (2.1) des Griffelements (2), insbesondere Pressen des Aufnahmeabschnitts (2.1) von mehreren Seiten gegen den in dem Aufnahmeabschnitt (2.1) angeordneten Abschnitt (5.1) des Filaments (5) und/oder
ii. Einbringen von Wärme in den Aufnahmeabschnitt (2.1) und/oder den Abschnitt (5.1) des Filaments (5).

## Beschreibung

### Stand der Technik

Die vorliegende Erfindung betrifft ein Verfahren zur Herstellung einer Reinigungsvorrichtung, insbesondere einer Interdental-Reinigungsvorrichtung.

Eine Reinigungsvorrichtung, die als Interdental-Reinigungsvorrichtung ausgebildet ist, wird beispielsweise in der JP 6501926 B2 beschrieben. Diese Interdental-Reinigungsvorrichtung umfasst einen aus Papier ausgebildeten Griffabschnitt sowie einen Bürstenabschnitt. In der JP 6501926 B2 wird vorgeschlagen, den Griffabschnitt integral mit dem Bürstenabschnitt auszubilden. Zwar kann durch eine derartige integrale Herstellung ein guter Halt des Bürstenabschnitts an dem Griffabschnitt ermöglicht werden. Die integrale Herstellung erfordert allerdings einen aufwändigen Herstellungsprozess.

Ferner offenbart die WO 2021/140102 A1 eine Reinigungsvorrichtung mit einem Griffelement und einem separaten Bürstenelement, welches eine Basis und an der Basis angeordnete Filamente aufweist. Zum Verbinden des Reinigungselements mit dem Griffelement wird ein Teil der Basis des Reinigungselements in einem Aufnahmeabschnitt des Griffelements angeordnet.

### Offenbarung der Erfindung

Die Aufgabe der vorliegenden Erfindung ist es, die Herstellung einer Reinigungsvorrichtung mit möglichst geringem Aufwand und gutem Halt zwischen Griff- und Bürstenabschnitt zu ermöglichen.

Zur Lösung der Aufgabe wird ein Verfahren zur Herstellung einer Reinigungsvorrichtung, insbesondere einer Interdental-Reinigungsvorrichtung, gemäß Patentanspruch 1 vorgeschlagen. Das Verfahren umfasst folgende Verfahrensschritte:
a. Ausbilden eines Griffelements aus einem Faserwerkstoff, insbesondere aus Papier oder Karton,
b. Bereitstellen eines Reinigungselements, das zumindest ein Filament umfasst,
c. Anordnen zumindest eines Abschnitts des zumindest einen Filaments des Reinigungselements in einem Aufnahmeabschnitt des Griffelements,
d. Verbinden des Reinigungselements mit dem Griffelement durch
   i. Pressen des Aufnahmeabschnitts des Griffelements, insbesondere Pressendes Aufnahmeabschnitts von mehreren Seiten gegen den in dem Aufnahmeabschnitt angeordneten Abschnitt des Filaments
      und/oder
   ii. Einbringen von Wärme in den Aufnahmeabschnittund/oder den Abschnitt des Filaments.

Zur Lösung der Aufgabe wird ferner eine Reinigungsvorrichtung vorgeschlagen, insbesondere Interdental-Reinigungsvorrichtung, mit einem Griffelement und einem Reinigungselement, das zumindest ein Filament umfasst, wobei das Griffelement aus einem Faserwerkstoff, insbesondere aus Papier oder Karton, ausgebildet ist und das Reinigungselement mit dem Griffelement verbunden ist, wobei zumindest ein Abschnitt des zumindest einen Filaments in einem Aufnahmeabschnitt des Griffelements angeordnet und mit dem Aufnahmeabschnitt verpresst und/oder verschmolzen ist.

Gemäß der Erfindung wird ein Griffelement der Reinigungsvorrichtung aus einem Faserwerkstoff, insbesondere aus Papier oder Karton, ausgebildet. Das Griffelement kann somit nach seiner Verwendung recycelt bzw. biologisch abgebaut werden. Ferner wird ein Reinigungselement bereitgestellt, das zumindest ein Filament umfasst, beispielsweise ein Bürstenelement, das mehrere Filamente umfasst, oder ein Reinigungselement mit einem Filament nach Art eines Zahnseidefilaments. Erfindungsgemäß wird zumindest ein Abschnitt des zumindest einen Filaments in einem Aufnahmeabschnitt des Griffelements angeordnet. Dann wird das Reinigungselement mit dem Griffelement verbunden, wobei einer oder beide der nachfolgend genannten Verfahrensschritte zur Anwendung kommen. Das Verbinden kann durch Pressen des Aufnahmeabschnitts des Griffelements erfolgen, insbesondere durch Pressen des Aufnahmeabschnitts von mehreren Seiten gegen den in dem Aufnahmeabschnitt angeordneten Abschnitt des Filaments. Alternativ oder zusätzlich kann Wärme in den Aufnahmeabschnitt und/oder den in dem Aufnahmeabschnitt angeordneten Abschnitt des Filaments eingebracht werden. Auf diese Weise kann erreicht werden, dass der in dem Aufnahmeabschnitt angeordneten Abschnitt des Filaments mit dem Aufnahmeabschnitt verpresst oder verschmolzen werden. Hierdurch kann eine widerstandsfähige Verbindung zwischen dem Griffelement und dem Reinigungselement ermöglicht werden. Zudem ist es möglich, das Reinigungselement als Fertigteil bereitzustellen, welches zur Herstellung der Reinigungsvorrichtung mit dem Griffelement verbunden wird, wodurch der Aufwand zur Herstellung der Reinigungsvorrichtung reduziert werden kann.

Bevorzugt ist die Verbindung zwischen dem Griffelement und dem Reinigungselement derart widerstandsfähig, dass sie sich erst bei Einwirkung einer Ausreißkraft von größer als 15 N löst.

Das Griffelement und das Reinigungselement sind als separate Elemente der Reinigungsvorrichtung, insbesondere Interdental-Reinigungsvorrichtung, ausgebildet. Bevorzugt sind das Griffelement und das Reinigungselement aus unterschiedlichen Materialien hergestellt. Während das Griffelement aus einem Faserwerkstoff, insbesondere aus Papier oder Karton, ausgebildet ist, kann das Reinigungselement aus einem Material oder mehreren Materialien ausgebildet sein, die keinen Faserwerkstoff umfassen, beispielsweise einem Kunststoff.

Gemäß einer vorteilhaften Ausgestaltung der Erfindung ist vorgesehen, dass
das Reinigungselement ein Bürstenelement ist, das mehrere Filamente umfasst,
der Verfahrensschritt des Anordnens, das Anordnen zumindest eines Abschnitts zumindest einiger der Filamente des Bürstenelements in einem Aufnahmeabschnitt des Griffelements umfasst,
der Verfahrensschritt des Verbindens des Bürstenelements mit dem Griffelement umfasst:
   i. Pressen des Aufnahmeabschnitts des Griffelements, insbesondere Pressen des Aufnahmeabschnitts von mehreren Seiten gegen die in dem Aufnahmeabschnitt angeordneten Filamente bzw. Abschnitte der Filamente und/oder
   ii. Einbringen von Wärme in den Aufnahmeabschnitt und/oder die in dem Aufnahmeabschnitt angeordneten Filamente bzw. Abschnitte der Filamente.

Insofern umfasst diese Ausgestaltung folgende Verfahrensschritte:
a. Ausbilden eines Griffelements aus einem Faserwerkstoff, insbesondere aus Papier oder Karton,
b. Bereitstellen eines Bürstenelements das mehrere Filamente umfasst,
c. Anordnen zumindest eines Abschnitts zumindest einiger der Filamente des Bürstenelements in einem Aufnahmeabschnitt des Griffelements,
d. Verbinden des Bürstenelements mit dem Griffelement durch
   i. Pressen des Aufnahmeabschnitts des Griffelements, insbesondere Pressendes Aufnahmeabschnitts von mehreren Seiten gegen die in demAufnahmeabschnitt angeordneten Filamente bzw. Abschnitte der Filamente und/oder
   ii. Einbringen von Wärme in den Aufnahmeabschnitt und/oder die in dem Aufnahmeabschnitt angeordneten Filamente bzw. Abschnitte der Filamente.

Im Sinne der Erfindung können lediglich Abschnitte mehrerer oder aller Filamente des Bürstenelements in dem Aufnahmeabschnitt angeordnet werden oder es können einige der Filamente vollständig in dem Aufnahmeabschnitt angeordnet werden. Gemäß dieser Ausgestaltung des erfindungsgemäßen Verfahrens kann eine Reinigungsvorrichtung zur Reinigung von Zahnzwischenräumen mit einem Griffelement und einem Bürstenelement erhalten werden.

Das Bürstenelement kann beispielsweise ein Metall und/oder einen Kunststoff aufweisen. Bevorzugt umfasst das Bürstenelement eine Basis, an welcher die Filamente angeordnet sind. Die Basis kann beispielsweise stabförmig sein. Die Basis des Bürstenelements ist bevorzugt aus einem Metall ausgebildet, beispielsweise aus einem Metalldraht, besonders bevorzugt aus einem kunststoffbeschichteten Metalldraht. Alternativ kann die Basis aus einem Kunststoff ausgebildet sein, beispielsweise aus Polypropylen (PP) oder einem thermoplastischen Elastomer (TPE).

Gemäß einer alternativen, vorteilhaften Ausgestaltung ist vorgesehen, dass
der Verfahrensschritt des Anordnens das Anordnen zumindest zweier Abschnitte, insbesondere zweier Endabschnitte des Filaments, jeweils in einem von zwei Aufnahmeabschnitten des Griffelements umfasst und
der Verfahrensschritt des Verbindens des Reinigungselements mit dem Griffelement umfasst:
   i. Pressen der Aufnahmeabschnitte des Griffelements, insbesondere Pressen der Aufnahmeabschnitte von mehreren Seiten gegen den in dem Aufnahmeabschnitt angeordneten Abschnitt des Filaments
      und/oder
   ii. Einbringen von Wärme in die Aufnahmeabschnitte und/oder die Abschnitte des Filaments.

Gemäß dieser Ausgestaltung des erfindungsgemäßen Verfahrens kann eine Reinigungsvorrichtung erhalten werden, die ein Griffelement und ein mit dem Griffelement verbundenes Filament, beispielsweise Zahnseidefilament umfasst, welches in zwei Anbindungsabschnitten mit dem Griffelement verbunden ist.

Bevorzugt sind das eine oder die mehreren Filamente aus einem Thermoplast ausgebildet, insbesondere aus einem Polyamid (PA), Polylactat (PLA), Polymethylmethacrylat (PMMA), Polycarbonat (PC), Polyethylenterephthalat (PET), Polybutyleneterephthalat (PBT), Polyurethan (PU), Polyethylen (PE), Polypropylen (PP), Polystyrol (PS), Polyetheretherketon (PEEK) oder Polyvinylchlorid (PVC).

Gemäß einer vorteilhaften Ausgestaltung der Erfindung ist vorgesehen, dass das Bürstenelement Filamente mit einem höheren Schmelzpunkt und Filamente mit einem niedrigen Schmelzpunkt umfasst und die Filamente mit dem höheren Schmelzunkt auf einer Seite des Bürstenelements angeordnet werden, die dem Griffelement, insbesondere dem Aufnahmeabschnitt des Griffelements, abgewandt ist. Bevorzugt sind die in dem Aufnahmeabschnitt angeordneten Filamente solche mit niedrigerem Schmelzpunkt. Eine derartige Ausgestaltung bietet den Vorteil, dass die in dem Aufnahmeabschnitt angeordneten Filamente bzw. Abschnitte der Filamente bereits bei einer niedrigeren Temperatur schmelzen und eine Verbindung zwischen dem Bürstenelement und dem Griffelement schaffen, während ein unerwünschtes Schmelzen der Filamente auf der dem Griffelement abgewandten Seite des Bürstenelements verhindert werden kann.

Gemäß einer vorteilhaften Ausgestaltung der Erfindung ist vorgesehen, dass die Wärme durch ein Heizelement eingebracht wird, welches in Kontakt mit dem Aufnahmeabschnitt gebracht wird. Bei dem Heizelement kann es sich um eine Heißsiegelbacke oder eine Walze handeln. Der Aufnahmeabschnitt kann zum Einbringen der Wärme zwischen dem Heizelement und einem Gegenstück oder zwischen dem Heizelement und einem weiteren Heizelement angeordnet werden. Bevorzugt wird der Aufnahmeabschnitt durch das Heizelement auch gepresst. Beispielsweise kann der Aufnahmeabschnittzwischen dem Heizelement und einem Gegenstück oder zwischen dem Heizelement und einem weiteren Heizelement gepresst werden.

Alternativ oder zusätzlich kann vorgesehen sein, dass die Wärme durch erwärmte Luft eingebracht wird. Eine derartige Ausgestaltung des erfindungsgemäßen Verfahrens bietet den Vorteil, dass das Einbringen der Wärme kontaktlos erfolgen kann. Beispielsweise kann ein erwärmter Luftstrom durch eine Heißlufteinrichtung erzeugt und auf den Aufnahmeabschnitt geleitet werden.

Alternativ oder zusätzlich kann vorgesehen sein, dass die Wärme durch Ultraschall eingebracht wird. Bei einer derartigen Ausgestaltung kann die Wärme über eine Sonotrode in den Aufnahmeabschnitt und/oder das Filament des Reinigungselements oder die Filamente des Bürstenelements eingebracht werden. Es ist möglich, den Aufnahmeabschnitt durch die Sonotrode auch zu pressen. Beispielsweise kann der Aufnahmeabschnitt zwischen der Sonotrode und einem Gegenstück gepresst werden.

Gemäß einer vorteilhaften Ausgestaltung der Erfindung ist vorgesehen, dass die Wärme durch Erwärmen eines Endbereichs des Griffelements eingebracht wird, welcher dem Aufnahmeabschnitt gegenüberliegt. Insofern kann die Wärme von der gegenüberliegenden Seite des Griffelements in den Aufnahmeabschnitt eingeleitet werden. Auf diese Weise kann ein unerwünschtes Erwärmen der Bereiche des Reinigungselements, insbesondere der Filamente des Bürstenelements, die nicht in dem Aufnahmeabschnitt des Griffelements eingebracht sind, verhindert werden.

Vorteilhaft ist eine Ausgestaltung des Verfahrens, bei welcher der Faserwerkstoff, insbesondere vor dem Ausbilden des Griffelements, mit einer heißsiegelbaren Beschichtung versehen wird. Wenn der Faserwerkstoff des Griffelements eine heißsiegelbare Beschichtung umfasst, kann beim Erwärmen des gegenüberliegenden Endbereichs des Griffelements gleichzeitig ein Verbinden einzelner Lagen des Faserwerkstoffs ermöglicht werden. Beispielsweise können mit einem heißsiegelbaren Material beschichtete, gerollte Lagen des Faserwerkstoffs durch das Erwärmen miteinander versiegelt werden.

Sofern das Bürstenelement eine Basis aufweist, an welcher die Filamente angeordnet sind, insbesondere eine Basis aus einem Metall und/oder einem Kunststoff, kann die Wärme gemäß einer vorteilhaften Ausgestaltung der Erfindung durch Erwärmen der Basis eingebracht werden. Die Basis eignet sich zum Einbringen der Wärme insbesondere dann, wenn sie aus einem Material mit hoher Wärmeleitfähigkeit ausgebildet ist, beispielsweise einem Metall. Beispielsweise kann einen Heizeinrichtung in Kontakt mit der Basis gebracht werden. Die Heizeinrichtung kann in eine Handhabungseinrichtung, beispielsweise einen Roboterarm, integriert sein, mit dem das Bürstenelement an das Griffelement herangeführt wird.

Gemäß einer vorteilhaften Ausgestaltung werden die nicht in dem Aufnahmeabschnitt angeordneten Filamente bzw. Abschnitte der Filamente des Bürstenelements gekühlt, insbesondere durch Luft gekühlt. Das Kühlen kann während des Einbringens der Wärme in den Aufnahmeabschnitt und/oder der in dem Aufnahmeabschnitt angeordneten Filamente bzw. Abschnitte der Filamente erfolgen. Durch das Kühlen kann ein unerwünschtes Schmelzen oder Verkleben der Filamente verhindert werden, die außerhalb des Aufnahmeabschnittsangeordnet sind.

Bevorzugt ist das Griffelement stabförmig ausgebildet. Der Aufnahmeabschnitt des Griffelements ist bevorzugt an einem stirnseitigen Ende des stabförmigen Griffelements angeordnet. Bevorzugt umfasst der Aufnahmeabschnitt eine Ausnehmung, insbesondere ein Sackloch oder ein Durchgangsloch, welches zu einer Stirnseite des stabförmigen Griffelements hin offen ist. Hierdurch kann eine Reinigungsvorrichtung erhalten werden, bei welcher das Bürstenelement mit dem Griffelement fluchtend angeordnet ist.

Gemäß einer vorteilhaften Ausgestaltung der Erfindung ist vorgesehen, dass der Aufnahmeabschnitt eine Stirnseite des Griffelements umfasst und das Pressen und/oder Einbringen der Wärme in einem Bereich des Aufnahmeabschnitts des Griffelements erfolgt, der einen Abstand von der Stirnseite des Griffelements aufweist. Auf diese Weise kann die Wahrscheinlichkeit reduziert werden, dass außerhalb des Aufnahmeabschnitts angeordnete Filamente des Bürstenelements gepresst und/oder erwärmt werden und möglicherweise schmelzen oder verkleben. Der Abstand beträgt bevorzugt mindestens das 0,1-fache einer Länge des Reinigungselements, insbesondere Bürstenelements, beträgt, beispielsweise mindestens das 0,15-fache der Länge des Reinigungselements, insbesondere Bürstenelements, oder das 0,2-fache der Länge des Reinigungselements, insbesondere Bürstenelements. Besonders bevorzugt beträgt der Abstand mindestens das 0,25-fache einer Länge des Reinigungselements, insbesondere Bürstenelements, beispielsweise mindestens das0,3-fache der Länge des Reinigungselements, insbesondere Bürstenelements oder das 0,35-fache der Länge des Reinigungselements, insbesondere Bürstenelements.

Das Pressen des Aufnahmeabschnitts kann mit einer Walze oder mehreren zusammenwirkende Walzen erfolgen. Die Walze kann einen kreisförmigen Querschnitt aufweisen. Alternativ ist es möglich, dass die Walze einen nicht-kreisförmigen Querschnitt aufweist oder drehbar um eine Drehachse gelagert ist, die nicht der Symmetrieachse der Walze entspricht. Hierdurch kann erreicht werden, dass beim Entlangführen des Griffelements an der Walze bzw. beim Hindurchführen des Griffelements durch zusammenwirkende Walzen, das Griffelement nur in ausgewählten Abschnitten des Griffelements gepresst wird, insbesondere nur in dem Aufnahmeabschnitt.

Bei einer Ausgestaltung des erfindungsgemäßen Verfahrens, bei welcher das Verbinden des Bürstenelements mit dem Griffelements durch Pressen des Aufnahmeabschnitts erfolgt, ist bevorzugt vorgesehen, dass das Griffelement, insbesondere der Aufnahmeabschnitt des Griffelements, angefeuchtet wird, insbesondere aufgeweicht wird. Hierdurch kann das Verbinden von Griffelement und Bürstenelement weiter gefördert werden.

Bei einer Ausgestaltung des erfindungsgemäßen Verfahrens, bei welcher das Verbinden des Bürstenelements mit dem Griffelements durch Pressen des Aufnahmeabschnitts erfolgt, ist bevorzugt vorgesehen, dass Wärme durch eine Relativbewegung von Griffelement und Reinigungselement, insbesondere Bürstenelement, zueinander erzeugt wird. Ein derartiges Vorgehen wird auch als Reibschweißen bezeichnet. Durch Reibung kann es zur Erwärmung und zum Aufschmelzen von Material des Griffelement und/oder Reinigungselements kommen. Bevorzugt kann vorgesehen sein, dass das Griffelement und/oder Reinigungselement vor dem Anordnen des zumindest einen Filaments in dem Aufnahmeabschnitt vorgewärmt wird. Hierdurch kann bewirkt werden, dass das zumindest eine Filament bereits beim Einbringen in den Aufnahmeabschnitt so stark erwärmt wird, dass eine Verbindung mit dem Griffelement entsteht.

Eine vorteilhafte Ausgestaltung sieht vor, dass der Faserwerkstoff, insbesondere das Papier, zum Ausbilden des Griffelements gerollt bzw. aufgewickelt wird. Bevorzugt wird der Faserwerkstoff vor und/oder während des Rollens befeuchtet. Durch das Befeuchten wird bevorzugt in dem Faserwerkstoff ein Wassergehalt von größer als 15%, bevorzugt von größer als 20%, besonders bevorzugt von größer als 30 %, eingestellt, wodurch das Einrollen des Papiers vereinfacht werden kann. Der Wassergehalt ist bevorzugt als gravimetrischer Wassergehalt definiert, insbesondere nach der Norm ISO 11465. Alternativ oder zusätzlich kann vorgesehen sein, dass vor und/während des Rollens ein Klebstoff auf den Faserwerkstoff aufgebracht wird. Der Klebstoff kann den Zusammenhalt des gerollten Faserwerkstoff verstärken. Weiter alternativ der zusätzlich kann vorgesehen sein, dass der gerollte Faserwerkstoff des Griffelements nach dem Rollen mit einem Klebstoff beschichtet wird. Zum Rollen kann der Faserwerkstoff als Lage oder Band vorliegen, insbesondere als Papierlage oder Papierband. Bevorzugt wird der Faserwerkstoff durch eine Fördereinrichtung, beispielsweise ein Förderband oder eine Förderrolle gegen eine gekrümmte Gegenfläche gedrückt und mitgenommen. Die Gegenfläche ist bevorzugt derart angeordnet, dass sich ein Abstand zwischen der Gegenfläche und der Fördereinrichtung in einer Förderrichtung gesehen verringert. Durch diesen immer kleiner werdenden Abstand wird ein Spalt gebildet, in welchem sich der Faserwerkstoff aufrollt und ein stabförmiges, gerolltes Griffelement bildet.

Eine alternative, vorteilhafte Ausgestaltung sieht vor, dass das Griffelement als Faserformteil durch Faserguss aus dem Faserwerkstoff ausgebildet wird. Das durch Faserguss ausgebildete Griffelement kann eine Formgebung aufweisen, die durch ein zum Faserguss verwendetes Werkzeug vorgegeben wird.

Gemäß einer vorteilhaften Ausgestaltung der Erfindung ist vorgesehen, dass mindestens ein Filament, das in dem Aufnahmeabschnitt angeordnet ist, derart angeordnet, insbesondere umgebogen, wird, dass es aus dem Aufnahmeabschnitt heraussteht, insbesondere an einer Stirnseite des Griffelements. Bevorzugt werden mehrere Filamente derart angeordnet, dass sie aus dem Aufnahmeabschnitt herausstehen. Eine solche Ausgestaltung bietet den Vorteil, dass das oder die herausstehenden Filamente nicht nur zur Verbindung des Bürstenelements mit dem Griffelement dienen, sondern auch eine Reinigungsleistung erbringen können. Insofern erfüllen die herausstehenden Filamente eine Doppelfunktion.

Eine vorteilhafte Ausgestaltung der Erfindung sieht vor, dass zum gleichzeitigen Ausbilden des Griffelements und des Aufnahmeabschnitts des Griffelements der Faserwerkstoff des Griffelements derart um eine, insbesondere virtuelle, Wickelachse gerollt bzw. aufgewickelt wird, dass entlang der Wickelachse ein Hohlraum gebildet wird. Hierzu kann der Faserwerkstoff um einen Wickelkörper gerollt bzw. aufgewickelt werden, der den Platz des Hohlraums einnimmt und nach dem Rollen entfernt wird.

Gemäß einer vorteilhaften Ausgestaltung der Erfindung ist vorgesehen, dass der Aufnahmeabschnitt des Griffelements vor dem Verbinden des Reinigungselements mit dem Griffelement durch Bohren erzeugt wird. Eine alternative, vorteilhafte Ausgestaltung sieht vor, dass der Aufnahmeabschnitt des Griffelements vor dem Verbinden des Reinigungselements mit dem Griffelement durch Eindrücken eines Dorns erzeugt wird. Durch das Bohren bzw. Eindrücken kann ein Aufnahmeabschnitt mit einem Sackloch erhalten werden, in welches das oder die Filamente des Reinigungselements, insbesondere Bürstenelements, eingebracht werden können. Das Sackloch hat bevorzugt einen Durchmesser im Bereich von 0,3 mm bis 3 mm, besonders bevorzugt im Bereich von 0,5 mm bis 1 mm.

Eine bevorzugte Ausgestaltung sieht vor, dass bei dem Verbinden des Reinigungselements, insbesondere Bürstenelements, mit dem Griffelement der Aufnahmeabschnitt des Griffelements durch Eindrücken des Reinigungselements in das Griffelement erzeugt wird.

In diesem Zusammenhang hat sich eine Ausgestaltung als vorteilhaft erwiesen, bei welcher das Griffelement während des Eindrückens des Dorns bzw. des Reinigungselements einen Wassergehalt von größer als 15%, bevorzugt von größer als 20%, besonders bevorzugt von größer als 30 %, aufweist. Der Wassergehalt ist bevorzugt als gravimetrischer Wassergehalt definiert, insbesondere nach der Norm ISO 11465.

Eine vorteilhafte Ausgestaltung sieht vor, dass zum gleichzeitigen Ausbilden des Griffelements und Verbinden des Reinigungselements mit dem Griffelement der Faserwerkstoff des Griffelements um einige Filamente bzw. Abschnitte einiger Filamente des Reinigungselements gerollt bzw. aufgewickelt wird. Das Reinigungselements kann während des Rollens bzw. Aufwickelns des Faserwerkstoffs mit einer Halteeinrichtung, beispielsweise einem Roboterarm, gehalten und ggf. nachgeführt werden.

Gemäß einer vorteilhaften Ausgestaltung ist vorgesehen, dass zum gleichzeitigen Ausbilden des Griffelements und Verbinden des Reinigungselements, insbesondere Bürstenelements, mit dem Griffelement einige Filamente bzw. Abschnitte einiger Filamente des Bürstenelements zwischen einem Griffelement-Oberteil und einem Griffelement-Unterteil angeordnet werden. Das Griffelement-Oberteil und/oder das Griffelement-Unterteil können mit einer heißsiegelbaren Beschichtung versehen sein. Das Griffelement-Oberteil ist bevorzugt als Abschnitt eines plattenförmigen Oberteilelements und das Griffelement-Unterteil als Abschnitt eines plattenförmigen Unterteilelements ausgebildet. Das plattenförmige Oberteilelement und/oder das plattenförmige Unterteilelement können beispielsweise Kartonplatten sein. Das Griffelement-Oberteil und das Griffelement-Unterteil können nach dem Verbinden mit dem Reinigungselement, insbesondere Bürstenelement, insbesondere gleichzeitig, aus dem jeweiligen Oberteilelement bzw. Unterteilelement herausgelöst, insbesondere ausgestanzt, werden.

Gemäß einer vorteilhaften Ausgestaltung der Erfindung ist es möglich, dass der Aufnahmeabschnitt des Griffelements von mehr als zwei Seiten gepresst wird, so dass ein gepresster Aufnahmeabschnitt mit drei-, vier- fünf- oder mehreckigem Querschnitt bzw. mit annähernd kreisförmigem Querschnitt erhalten wird. Bevorzugt ist ein Querschnitt des gepressten Aufnahmeabschnitts gegenüber einem Querschnitt des Griffelements außerhalb des Aufnahmeabschnitts reduziert, d.h. dass er insbesondere einen kleineren Durchmesser aufweist.

Beim Pressen des Aufnahmeabschnitts des Griffelements wird bevorzugt eine Prägung in die Oberfläche des Griffelements eingebracht. Die Prägung kann beispielsweise ein Rillen-muster und/oder ein Logo aufweisen. Durch die Prägung kann die Haptik des Griffelements und/oder die Biegsamkeit des Griffelements eingestellt werden. Ferner ist es möglich, durch die Prägung Informationen zum Hersteller der Reinigungsvorrichtung oder zu der Größe des Reinigungselements auf das Griffelement aufzubringen.

Gemäß einer vorteilhaften Ausgestaltung des Verfahrens, kann das Bürstenelement ein Formschlusselement aufweisen, insbesondere ein oder mehrere Widerhaken, welches durch das Pressen des Aufnahmeabschnitts mit dem Aufnahmeabschnitt verbunden, insbesondere verhakt wird. Sofern das Bürstenelement eine aus einem Draht ausgebildete Basis umfasst, kann zur Bildung eines Formschlusselements der Draht vor dem Einbringen in den Aufnahmeabschnitt umgebogen oder umgeknickt werden. Alternativ kann der Draht mit einem weiteren Draht verdrillt werden. Hierbei kann durch den weiteren Draht ein als Widerhaken ausgestaltetes Formschlusselement gebildet werden. Weiter alternativ kann der Draht mit sich selbst verdrillt und umgebogen oder umgeknickt werden.

Eine vorteilhafte Ausgestaltung des Verfahrens sieht vor, dass ein dem Aufnahmeabschnitt gegenüberliegendes Ende des Griffelements gepresst wird. Bevorzugt wird das dem Aufnahmeabschnitt gegenüberliegendes Ende derart gepresst, dass ein schaufelartiger Bereich des Griffelements erhalten wird. Ein solcher schaufelartiger Bereich kann als Massageabschnitt verwendet werden. Alternativ oder zusätzlich wird das dem Aufnahmeabschnitt gegenüberliegendes Ende des Griffelements derart gepresst, dass eine aufgeraute Oberflächenbeschaffenheit erzeugt wird. Eine derartige Oberfläche kann das Massieren des Zahnfleisches ermöglichen. Ferner ist es möglich, mit einem derartigen Massageabschnitt ein Medikament aufzutragen, beispielsweise Chlorhexidin (CHX) oder ein Fluorid. Alternativ kann das dem Aufnahmeabschnitt gegenüberliegende Ende derart gepresst werden, dass das Ende spitz zulaufend ausgebildet ist, so dass ein Zahnstocherabschnitt gebildet wird.

Bevorzugt wird zur Ausbildung des Griffelements ein farbiger Faserwerkstoff, beispielsweise ein farbiges Papier verwendet. Über die Farbe, können alternativ oder zusätzlich Informationen zum Hersteller der Interdental-Reinigungsvorrichtung oder zu der Größe des Bürstenelements in das Griffelement eingebracht werden. Alternativ oder zusätzlich kann der Faserwerkstoff, insbesondere das Papier, bedruckt sein, beispielsweise mit einem Muster, einem Logo und/oder einer Kennzeichnung.

Gemäß einer vorteilhaften Ausgestaltung des erfindungsgemäßen Verfahrens ist vorgesehen, dass das Reinigungselement, insbesondere mittels einer Reinigungselement-Herstellungsmaschine, hergestellt wird und das Reinigungselementunmittelbar nach dem Herstellen des Reinigungselements mit dem Griffelement verbunden wird. Insbesondere erfolgt zwischen dem Verfahrensschritt des Herstellens des Reinigungselements und dem Verfahrensschritt des Verbindens des Reinigungselements mit dem Griffelement kein Verfahrensschritt des Sammelns mehrerer hergestellter Reinigungselemente. Dieses Vorgehen bietet den Vorteil, dass ein aufwändiges Vereinzeln hergestellter Reinigungselemente nicht erforderlich ist, da die einzelnen Reinigungselemente jeweils unmittelbar nach ihrer Herstellung mit einem Griffelement verbunden werden. Bevorzugt findet das Verbinden des Reinigungselements mit dem Griffelement in derselben Maschine statt wie das Herstellen des Reinigungselements, insbesondere in derselben Reinigungselement-Herstellungsmaschine. Alternativ bevorzugt ist es, wenn die zur Herstellung des Reinigungselements verwendete Reinigungselement-Herstellungsmaschine unmittelbar mit einer Verbindungsmaschine gekoppelt ist, mittels welcher das hergestellte Reinigungselement mit einem Griffelement verbunden wird. Die Kopplung der Reinigungselement-Herstellungsmaschine mit der Verbindungsmaschine kann über eine Fördereinrichtung oder eine Brücke oder einen Schlauch erfolgen.

Die vorstehend beschriebenen vorteilhaften Ausgestaltungen und Merkmale betreffend das Verfahren zur Herstellung der Reinigungsvorrichtung können allein oder in Kombination auch bei der Reinigungsvorrichtung Anwendung finden.

Die Reinigungsvorrichtung ist bevorzugt als Interdental-Reinigungsvorrichtung ausgebildet. Alternativ kann die Reinigungsvorrichtung als Zahnbürste oder als Pinsel ausgebildet sein.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Figuren

Die **Fig. 1** zeigt eine Reinigungsvorrichtung gemäß einem ersten Ausführungsbeispiel der Erfindung in einer schematischen Seitenansicht.
Die **Fig. 2** zeigt die Reinigungsvorrichtung gemäß Fig. 1 in einer schematischen Schnittdarstellung.
Die **Fig. 3** zeigt eine Reinigungsvorrichtung gemäß einem zweiten Ausführungsbeispiel der Erfindung in einer schematischen Seitenansicht.
Die **Fig. 4** zeigt die Reinigungsvorrichtung gemäß Fig. 3 in einer schematischen Schnittdarstellung.
Die **Fig. 5** zeigt die Reinigungsvorrichtung gemäß Fig. 1 in einer schematischen Schnittdarstellung, wobei der Aufnahmeabschnitt des Griffelements erwärmt und/oder gepresst wird.
Die **Fig. 6** zeigt die Reinigungsvorrichtung gemäß Fig. 5 in einer schematischen Schnittdarstellung, nach dem Abschluss des Erwärmens und/oder Pressens.
Die **Fig. 7** zeigt eine Reinigungsvorrichtung gemäß einem dritten Ausführungsbeispiel der Erfindung in einer schematischen Schnittdarstellung.
Die **Fig. 8** zeigt eine Reinigungsvorrichtung gemäß einem vierten Ausführungsbeispiel der Erfindung in einer schematischen Schnittdarstellung.
Die **Fig. 9** zeigt ein Ablaufdiagramm eines ersten Ausführungsbeispiels eines erfindungsgemäßen Verfahrens.
Die **Fig. 10** zeigt ein Ablaufdiagramm eines zweiten Ausführungsbeispiels eines erfindungsgemäßen Verfahrens.
Die **Fig. 11** zeigt ein Ablaufdiagramm eines dritten Ausführungsbeispiels eines erfindungsgemäßen Verfahrens.
Die **Fig. 12** zeigt ein Ablaufdiagramm eines vierten Ausführungsbeispiels eines erfindungsgemäßen Verfahrens.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

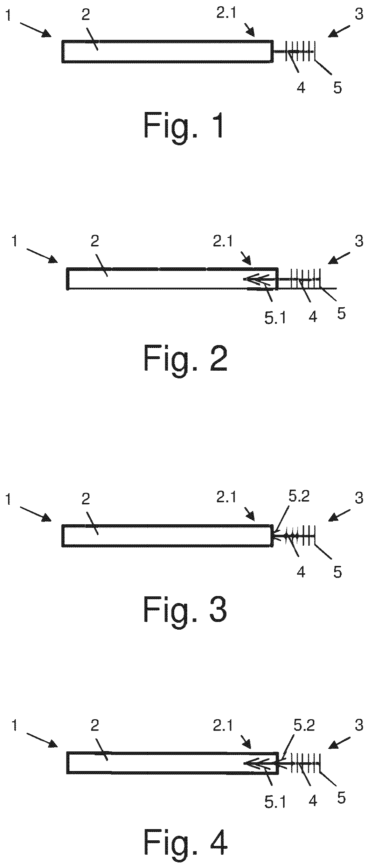

Die Darstellungen in **Fig. 1 und 2** zeigen eine als Interdental-Reinigungsvorrichtung ausgebildete Reinigungsvorrichtung 1 gemäß einem Ausführungsbeispiel der Erfindung. Die Interdental-Reinigungsvorrichtung 1 umfasst ein Griffelement 2, welches aus einem Faserwerkstoff, insbesondere aus Papier oder Karton, ausgebildet ist. Ein weiterer Bestandteil der Interdental-Reinigungsvorrichtung 1 ist ein als Bürstenelement ausgebildetes Reinigungselement 3, das mit dem Griffelement 2 verbunden ist.

Das Griffelement 2 weist eine zylindrische bzw. stabförmige Gestalt auf und ist bevorzugt aus gerolltem bzw. aufgewickeltem Papier gebildet. Das Papier kann vor dem Ausbilden des Griffelements 2 mit einer heißsiegelbaren Beschichtung versehen werden. An einem ersten stirnseitigen Ende, ist ein Aufnahmeabschnitt 2.1 vorgesehen, in dem das Bürstenelement3 aufgenommen ist. Bei dem Ausführungsbeispiel ist ein zweites Ende des Griffelements 2, welches dem ersten Ende gegenüberliegend angeordnet ist, als freies Ende mit einer im Wesentlichen glatten Stirnseite ausgebildet. Gemäß einer Abwandlung des Ausführungsbeispiels kann vorgesehen sein, dass an dem zweiten Ende ein Massageabschnitt vorgesehen ist, der eine Formgebung und/oder Oberflächenbeschaffenheit aufweist, die es ermöglicht, mit dem Massageabschnitt das Zahnfleisch zu massieren. Hierzu kann das zweite Endebeispielsweise schaufelartig ausgestaltet sein und/oder eine raue Oberfläche aufweisen. Miteinem derartigen Massageabschnitt kann ein Medikament appliziert werden, beispielsweise Chlorhexidin (CHX) oder ein Fluorid. Alternativ kann an dem zweiten Ende ein Zahnstocherabschnitt vorgesehen sein, der spitz zulaufend ausgebildet ist.

Das Bürstenelement 3 der Interdental-Reinigungsvorrichtung 1 besteht aus einer Basis 4 und an der Basis angeordneten Filamenten 5. Die Filamente sind aus einem Thermoplast ausgebildet, insbesondere aus einem Polyamid (PA), Polylactat (PLA), Polymethylmethacrylat (PMMA), Polycarbonat (PC), Polyethylenterephthalat (PET), Polybutyleneterephthalat (PBT), Polyurethan (PU), Polyethylen (PE), Polypropylen (PP), Polystyrol (PS), Polyetheretherketon (PEEK) oder Polyvinylchlorid (PVC). Die Basis 4 ist bei dem Ausführungsbeispiel als gerader Draht ausgestaltet, dessen Haupterstreckungsrichtung parallel zu einer Hauptachse des Griffelementes 2 angeordnet ist. Die Filamente 5 sind in die Basis 4 eingesteckt und/oder eingeflochten und verlaufen im Wesentlichen senkrecht zu der Haupterstreckungsrichtung der Basis 4. Einige Filamente 5.1 des Bürstenelements 3 sind vollständig in dem Aufnahmeabschnitt 2.1 des Griffelements 2 angeordnet und mit dem Aufnahmeabschnitt 2.1 verpresst und/oder verschmolzen. Hierdurch sind das Griffelement 2 und das Bürstenelement 3 miteinander verbunden.

**In** **Fig. 3 und 4** ist ein zweites Ausführungsbeispiel einer erfindungsgemäßen Reinigungsvorrichtung 1 dargestellt, die als Interdental-Reinigungsvorrichtung ausgebildet ist. Dieses Ausführungsbeispiel entspricht im Wesentlichen dem in Fig. 1 und 2 gezeigten Ausführungsbeispiel, weshalb auf die Beschreibung dieser Figuren verwiesen wird. Im Unterschied zu dem ersten Ausführungsbeispiel ist bei der Reinigungsvorrichtung gemäß dem zweiten Ausführungsbeispiel lediglich ein Abschnitt 5.1 einiger Filamente der Gesamtheit der Filamente 5 des Bürstenelementes 3 in dem Aufnahmeabschnitt 2.1 angeordnet. Mehrere Filamente 5.2 sind derart angeordnet, insbesondere umgebogen, dass sie aus dem Aufnahmeabschnitt 2.1 herausstehen.

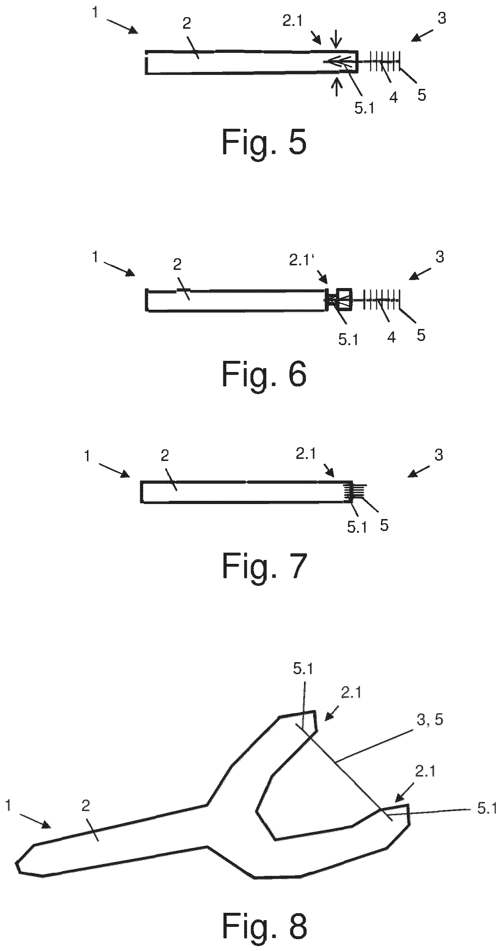

Die Darstellung in **Fig. 5** zeigt ein Ausführungsbeispiel einer erfindungsgemäßen als Interdental-Reinigungsvorrichtung ausgebildeten Reinigungsvorrichtung 1 während des Herstellungsvorgangs, wobei der Aufnahmeabschnitt 2.1 des Griffelements 2 gepresst wird, insbesondere von mehreren Seiten gegen die in dem Aufnahmeabschnitt 2.1 angeordneten Filamente 5.1 gepresst wird. Das Pressen des Aufnahmeabschnitts 2.1 kann mittels mehrerer, beispielsweise zweier, Pressbacken erfolgen, die aufeinander zu bewegt werden. Die Pressbacken können eine Oberflächenstruktur aufweisen, über welche beim Pressen eine Gravur in die Oberfläche des Aufnahmeabschnitts 2.1 eingebracht wird, beispielsweise eine Rillenstruktur oder ein Logo. Optional wird während des Pressens Wärme in den Aufnahmeabschnitt 2.1 und/oder die in dem Aufnahmeabschnitt 2.1 angeordneten Filamente 5.1 eingebracht. Zum Gleichzeitigen Pressen und Einbringen von Wärme kann ein Heizelement verwendet werden, welches in Kontakt mit dem Aufnahmeabschnitt gebracht wird, insbesondere eine Heißsiegelbacke. Alternativ kann zum Gleichzeitigen Pressen und Einbringen von Wärme eine Ultraschall-Sonotrode in Kontakt mit dem Aufnahmebereich gebracht werden. Weiter alternativ kann die die Wärme durch Erwärmen des Endbereichs des Griffelements 2 eingebracht werden, welcher dem Aufnahmeabschnitt 2.1 gegenüberliegt oder durch Erwärmen der Basis 4 des Bürstenelements 3 oder die Wärme kann durch erwärmte Luft eingebracht werden.

Anhand der Fig. 5 ist anschaulich erkennbar, dass eine Ausgestaltung von Vorteil sein kann, bei welcher das Bürstenelement 3 erste Filamente 5 mit einem höheren Schmelzpunkt und zweite Filamente 5.1 mit einem niedrigen Schmelzpunkt umfasst und die ersten Filamente 5 mit dem höheren Schmelzpunkt auf einer Seite des Bürstenelements 3 angeordnet werden, die dem Griffelement 2, insbesondere dem Aufnahmeabschnitt 2.1 des Griffelements 2, abgewandt ist. Denn beim Einbringen von Wärme in den Aufnahmeabschnitt 2.1 wirkt die Wärme vornehmlich auf die in dem Aufnahmeabschnitt 2.1 angeordneten zweiten Filamente 5.1 mit dem niedrigen Schmelzpunkt. Die von dem Aufnahmeabschnitt 2.1 und damit der Einbringstelle der Wärme weiter entfernten Filamente 5 werden aufgrund ihrer Entfernung von dem Aufnahmeabschnitt 2.1 und ihres höheren Schmelzpunkts weniger wahrscheinlich von der in den Aufnahmeabschnitt 2.1 eingebrachten Wärme beeinträchtigt. Alternativ kann vorgesehen sein, dass die außerhalb des Aufnahmeabschnitts 2.1 angeordneten Filamente 5 gekühlt werden, während die Wärme in den Aufnahmeabschnitt 2.1 eingebracht wird. Das Kühlen kann beispielsweise durch kalte Luft oder Wasser erfolgen.

Der Darstellung in Fig. 5 ist ferner zu entnehmen, dass der Aufnahmeabschnitt 2.1 eine Stirnseite des Griffelements 2 umfasst und das Pressen und/oder Einbringen der Wärme in einem Bereich des Aufnahmeabschnitts 2.1 des Griffelements 2 erfolgt, der einen Abstand von der Stirnseite des Griffelements 2 aufweist. Dieser Abstand beträgt bevorzugt mindestens das 0,1-fache der Länge des Bürstenelements 3, insbesondere der Basis 4, beträgt, bevorzugt mindestens das 0,25-fache der Länge des Bürstenelements 3, insbesondere der Basis 4.

In der **Fig. 6** ist eine Reinigungsvorrichtung 1 dargestellt, die - wie in Fig. 4 gezeigt - durch Pressen und ggf. Einbringen von Wärme behandelt worden ist. Durch das Pressen wurde ein gepresster Aufnahmeabschnitt 2.1' erzeugt, der hier übertrieben stark eingedrückt dargestellt ist. Der gepresste Aufnahmeabschnitt 2.1' kann zwei im Wesentlichen parallelen Oberflächen aufweisen. Der gepresste Aufnahmeabschnitts 2.1' weist im Vergleich zu einem nicht gepressten Aufnahmeabschnitt 2.1 einen stärkeren Zusammenhalt mit dem Bürstenelement 3 auf.

In **Fig. 7** ist ein drittes Ausführungsbeispiel einer erfindungsgemäßen Reinigungsvorrichtung 1 dargestellt, welche als Pinsel oder Zahnbürste ausgebildet ist. Im Unterschied zu den ersten beiden Ausführungsbeispielen ist bei der Reinigungsvorrichtung gemäß dem dritten Ausführungsbeispiel von allen Filamenten 5 des Bürstenelementes 3 jeweils ein Abschnitt 5.1 in dem Aufnahmeabschnitt 2.1 angeordnet. Insofern stehen alle Filamente 5 des Bürstenelements 3 aus dem Aufnahmeabschnitt 2.1 hervor.

Optional können die Filamente 5 des Bürstenelements 3 miteinander verbunden werden, insbesondere miteinander verschweißt werden bevor die Filamente des Bürstenelements 3 in den Aufnahmeabschnitt 2.1 eingebracht werden. Auf diese Weise kann ein unerwünschtes Herausrutschen einzelner Filamente verhindert werden. Alternativ können die Filamente 5 vor dem Einbringen in den Aufnahmeabschnitt 2.1 mit einem Verbindungselement, beispielsweise einer Fassung, miteinander verbunden werden. Das Verbindungselement kann dann ebenfalls mit dem Griffelement verbunden werden, beispielsweise durch Pressen und/oder Einbringen von Wärme.

In **Fig. 8** ist ein viertes Ausführungsbeispiel einer erfindungsgemäßen Reinigungsvorrichtung 1 dargestellt, welche als Zahnseide-Reinigungsvorrichtung ausgebildet ist. Die Reinigungsvorrichtung 1 umfasst ein Griffelement 2, das gabelförmig ausgestaltet ist. Das Griffelement 2 umfasst genau zwei Aufnahmeabschnitte 2.1 zur Verbindung eines Filaments 5 des Reinigungselements 3. Das Filament 5 ist als Zahnseidefilament ausgestaltet und in beiden Aufnahmebereichen 2.1 mit dem Griffelement 2 verpresst und/oder verschmolzen.

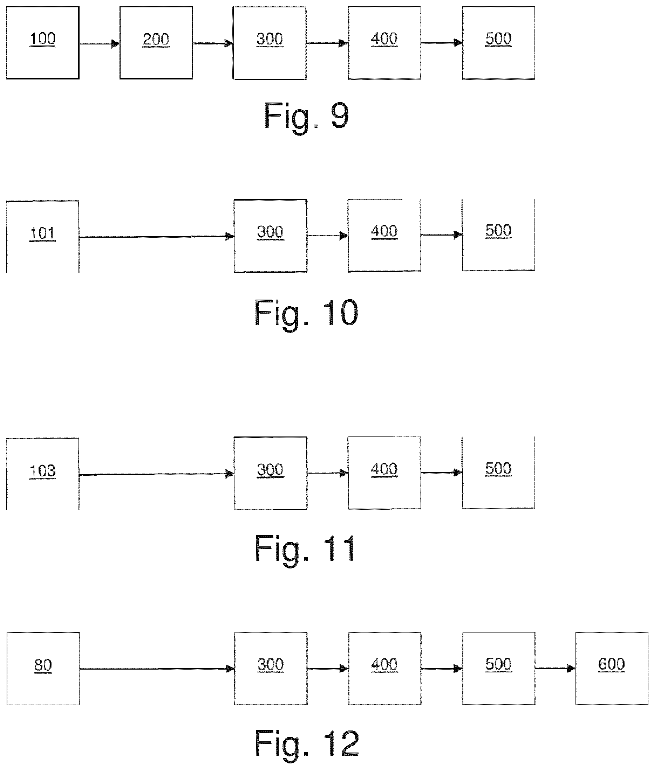

Anhand der Darstellungen in **Fig. 9 bis 12** sollen nachfolgend mehrere Ausführungsbeispiele eines Verfahrens zur Herstellung einer Interdental-Reinigungsvorrichtung 1 aus einem Griffelement 2 und einem Bürstenelement 3 beschrieben werden, wobei das Griffelement 2aus einem Faserwerkstoff, insbesondere aus Papier oder Karton, ausgebildet wird und das Bürstenelement 3 mit dem Griffelement 2 verbunden wird. Das Verbinden des Bürstenelements3 mit dem Griffelement 2 erfolgt durch
i. Pressen des Aufnahmeabschnitts 2.1 des Griffelements 2, insbesondere Pressen des Aufnahmeabschnitts 2.1 von mehreren Seiten gegen die in dem Aufnahmeabschnitt 2.1 angeordneten Filamente 5.1 bzw. Abschnitte 5.1 der Filamente 5
   und/oder
ii. Einbringen von Wärme in den Aufnahmeabschnitt 2.1 und/oder die in dem Aufnahmeabschnitt 2.1 angeordneten Filamente 5.1 bzw. Abschnitte 5.1 der Filamente 5.

Die **Fig. 9** zeigt ein Ablaufdiagramm eines ersten Ausführungsbeispiels eines derartigen Verfahrens zur Herstellung einer Reinigungsvorrichtung 1. Gemäß dem ersten Ausführungsbeispiel wird - in einem Verfahrensschritt des Rollens 100 - zunächst das Griffelement 2 durch Rollen bzw. Aufwickeln des Faserwerkstoffs gebildet. Es wird ein im Wesentlichen stabförmiges, zylindrisches Griffelement 2 erhalten, das nach Art eines Schafts ausgebildet ist. Alternativ zu dem Rollen 100 kann das ein Verfahrensschritt Anwendung finden, bei dem das Griffelement 2 durch Faserguss ausgebildet wird.

In einem dem Rollen 100 nachfolgenden Verfahrensschritt 200 wird der Aufnahmeabschnitt 2.1 des Griffelements 2 erzeugt. Dies kann dadurch erfolgen, dass ein Sackloch in eine Stirnseite des Griffelements 2 gebohrt wird. Alternativ wird das Sackloch durch Eindrücken eines Dorns in die Stirnseite des Griffelements 2 erzeugt. Insofern wird in dem Verfahrensschritt 200 eine Aufnahme für das Bürstenelement 3 in dem Griffelement 2 erzeugt.

In einem Verfahrensschritt des Bereitstellens 300 wird ein Bürstenelement 3 bereitgestellt, das mehrere Filamente 5 umfasst.

In einem Verfahrensschritt des Einbringens 400 wird dann zumindest ein Abschnitt 5.1 zumindest einiger der Filamente 5 des Bürstenelements 3 in einem Aufnahmeabschnitt 2.1 des Griffelements 2 angeordnet. Dies kann beispielsweise dadurch erfolgen, dass das Bürstenelements 3 in Richtung des Griffelements 2 bewegt und teilweise in den Aufnahmeabschnitt 2.1, insbesondere in das Sackloch des Aufnahmeabschnitts 2.1, eingebracht wird. Bevorzugt füllt der in den Aufnahmeabschnitt 2.1 eingebrachte Teil des Bürstenelements 3 das Sackloch des Aufnahmeabschnitts 2.1 vollständig aus.

In einem dem Einbringen 400 nachfolgenden Verfahrensschritt des Verbindens 500 erfolgt das Verbinden des Bürstenelements 3 mit dem Griffelement 2. Hierbei wird der Aufnahmeabschnitt 2.1 des Griffelements 2 gepresst. Alternativ oder zusätzlich wird Wärme in die in dem Aufnahmeabschnitt 2.1 angeordneten Filamente 5.1 bzw. Abschnitte 5.1 der Filamente 5 eingebracht. Das Verbinden 500 kann so erfolgen, wie dies beispielsweise im Zusammenhang mit Fig. 5 und 6 erläutert worden ist.

Die **Fig. 10** zeigt ein Ablaufdiagramm eines zweiten Ausführungsbeispiels eines Verfahrens zur Herstellung einer Interdental-Reinigungsvorrichtung 1. Bei diesem Ausführungsbeispiel werden in einem Verfahrensschritt des Rollens 101 - zunächst das Griffelement 2 durch Rollen bzw. Aufwickeln des Faserwerkstoffs gebildet, wobei der Faserwerkstoff derart um eine, insbesondere virtuelle, Wickelachse gerollt bzw. aufgewickelt wird, dass entlang der Wickelachse ein Hohlraum gebildet wird. Insofern wird in dem Verfahrensschritt 101 gleichzeitig das Griffelement 2 und der Aufnahmeabschnitt 2.1 des Griffelements 2 erzeugt.

In einem Verfahrensschritt des Bereitstellens 300 wird ein Bürstenelement 3 bereitgestellt, das mehrere Filamente 5 umfasst.

In einem Verfahrensschritt des Einbringens 400 wird dann zumindest ein Abschnitt 5.1 zumindest einiger der Filamente 5 des Bürstenelements 3 in einem Aufnahmeabschnitt 2.1 des Griffelements 2 angeordnet. Dies kann beispielsweise dadurch erfolgen, dass das Bürstenelements 3 in Richtung des Griffelements 2 bewegt und teilweise in den Aufnahmeabschnitt 2.1, insbesondere in das Sackloch des Aufnahmeabschnitts 2.1, eingebracht wird. Bevorzugt füllt der in den Aufnahmeabschnitt 2.1 eingebrachte Teil des Bürstenelements 3 das Sackloch des Aufnahmeabschnitts 2.1 vollständig aus.

In einem dem Einbringen 400 nachfolgenden Verfahrensschritt des Verbindens 500 erfolgt das Verbinden des Bürstenelements 3 mit dem Griffelement 2. Hierbei wird der Aufnahmeabschnitt 2.1 des Griffelements 2 gepresst. Alternativ oder zusätzlich wird Wärme in die in dem Aufnahmeabschnitt 2.1 angeordneten Filamente 5.1 bzw. Abschnitte 5.1 der Filamente 5 eingebracht. Das Verbinden 500 kann so erfolgen, wie dies beispielsweise im Zusammenhang mit Fig. 5 und 6 erläutert worden ist.

Die **Fig. 11** zeigt ein Ablaufdiagramm eines dritten Ausführungsbeispiels eines Verfahrens zur Herstellung einer Interdental-Reinigungsvorrichtung 1. Bei diesem Ausführungsbeispiel wird der Faserwerkstoff, insbesondere das Papier, in einem Verfahrensschritt des Rollens 103 zunächst gerollt, um das Griffelement 2 auszubilden. Der Faserwerkstoff wird vor und/oder während des Rollens befeuchtet, so dass in dem Faserwerkstoff ein Wassergehalt von größer als 15%, bevorzugt von größer als 20%, besonders bevorzugt von größer als 30 %, eingestellt ist.

Unmittelbar nach dem Rollen 103, also in einem nicht getrocknetem Zustand, in dem der Wassergehalt in dem Faserwerkstoff ein größer als 15%, bevorzugt von größer als 20%, besonders bevorzugt von größer als 30 %, ist, wird in einem nachfolgenden Verfahrensschritt des Einbringens 401 das Bürstenelements 3 teilweise in das Griffelement 3 eingedrückt und dabei der Aufnahmeabschnitt 2.1 des Griffelements 2 erzeugt.

In einem Verfahrensschritt des Bereitstellens 300 wird ein Bürstenelement 3 bereitgestellt, das mehrere Filamente 5 umfasst.

In einem Verfahrensschritt des Einbringens 400 wird dann zumindest ein Abschnitt 5.1 zumindest einiger der Filamente 5 des Bürstenelements 3 in einem Aufnahmeabschnitt 2.1 des Griffelements 2 angeordnet. Dies kann beispielsweise dadurch erfolgen, dass das Bürstenelements 3 in Richtung des Griffelements 2 bewegt und teilweise in den Aufnahmeabschnitt 2.1, insbesondere in das Sackloch des Aufnahmeabschnitts 2.1, eingebracht wird. Bevorzugt füllt der in den Aufnahmeabschnitt 2.1 eingebrachte Teil des Bürstenelements 3 das Sackloch des Aufnahmeabschnitts 2.1 vollständig aus.

In einem dem Einbringen 400 nachfolgenden Verfahrensschritt des Verbindens 500 erfolgt das Verbinden des Bürstenelements 3 mit dem Griffelement 2. Hierbei wird der Aufnahmeabschnitt 2.1 des Griffelements 2 gepresst. Alternativ oder zusätzlich wird Wärme in die in dem Aufnahmeabschnitt 2.1 angeordneten Filamente 5.1 bzw. Abschnitte 5.1 der Filamente 5 eingebracht. Das Verbinden 500 kann so erfolgen, wie dies beispielsweise im Zusammenhang mit Fig. 5 und 6 erläutert worden ist.

In **Fig. 12** ist ein viertes Ausführungsbeispiels eines Verfahrens zur Herstellung einer Reinigungsvorrichtung 1 gezeigt. Bei diesem Ausführungsbeispiel werden zunächst ein plattenförmiges Oberteilelement und ein plattenförmiges Unterteilelement bereitgestellt, wobei das plattenförmige Oberteilelement und/oder das plattenförmige Unterteilelement mit einer heißsiegelbaren Beschichtung versehen ist, vgl. Verfahrensschritt 80. Ein Abschnitt des Oberteilelements bildet im weiteren Verlauf des Verfahrens ein Griffelement-Oberteil und ein Abschnitt des Unterteilelement bildet im weiteren Verlauf des Verfahrens ein Griffelement-Unterteil.

In einem Verfahrensschritt des Bereitstellens 300 wird ein Bürstenelement 3 bereitgestellt, das mehrere Filamente 5 umfasst.

Dann wird in einem Verfahrensschritt 400 das Bürstenelement 3 teilweise zwischen das Griffelement-Oberteil und das Griffelement-Unterteil eingebracht.

In einem dem Einbringen 400 nachfolgenden Verfahrensschritt des Verbindens 500 erfolgt das Verbinden des Bürstenelements 3 mit dem Griffelement 2. Hierbei wird der Aufnahmeabschnitt 2.1 des Griffelements 2 gepresst. Alternativ oder zusätzlich wird Wärme in die in dem Aufnahmeabschnitt 2.1 angeordneten Filamente 5.1 bzw. Abschnitte 5.1 der Filamente 5 eingebracht. Das Verbinden 500 kann so erfolgen, wie dies beispielsweise im Zusammenhang mit Fig. 5 und 6 erläutert worden ist.

Schließlich wird in einem dem Pressen nachfolgenden Verfahrensschritt des Vereinzelns 600 das Griffelement 2, insbesondere das Griffelement-Oberteil und das Griffelement-Unterteil aus dem jeweiligen Oberteilelement bzw. Unterteilelement herausgelöst. Das Herauslösen erfolgt bevorzugt durch Stanzen.

Bei dem Herstellungsverfahren gemäß dem vierten Ausführungsbeispiel können gleichzeitig mehrere Reinigungsvorrichtungen 1 hergestellt werden. Hierzu werden in dem Verfahrensschritt 400 mehrere Bürstenelemente 3 jeweils teilweise zwischen das Griffelement-Oberteil und das Griffelement-Unterteil eingebracht. Dann werden die Bürstenelemente 3 mit den Griffelementen 2 verbunden. In dem Vereinzelungsschritt können gleichzeitig oder nacheinander mehrere Griffelemente 2, dem jeweiligen Oberteilelement bzw. Unterteilelement herausgelöst werden, beispielsweise durch Stanzen.

Gemäß einer Abwandlung des vierten Ausführungsbeispiels kann das Vereinzeln 600 vor dem Verbinden 500 erfolgen.

Das Verfahren gemäß dem vierten Ausführungsbeispiel bzw. dessen Abwandlung kann gemäß einer weiteren Abwandlug auch zur Herstellung der in Fig. 8 gezeigten Reinigungsvorrichtung 1 nach Art einer Zahnseide-Reinigungsvorrichtung Anwendung finden. Dabei werden ebenfalls werden zunächst ein plattenförmiges Oberteilelement und ein plattenförmiges Unterteilelement bereitgestellt. Das plattenförmige Oberteilelement und/oder das plattenförmige Unterteilelement ist mit einer heißsiegelbaren Beschichtung versehen, vgl. Verfahrensschritt 80. Ein Abschnitt des Oberteilelements bildet im weiteren Verlauf des Verfahrens ein Griffelement-Oberteil und ein Abschnitt des Unterteilelement bildet im weiteren Verlauf des Verfahrens ein Griffelement-Unterteil.

In einem Verfahrensschritt des Bereitstellens 300 wird ein Reinigungselement 3 bereitgestellt, das genau ein Filament 5 umfasst, insbesondere aus genau einem Filament 5 besteht.

Dann werden in einem Verfahrensschritt 400 die beiden Endabschnitte des Reinigungselements 3 zwischen das Griffelement-Oberteil und das Griffelement-Unterteil eingebracht.

In einem dem Einbringen 400 nachfolgenden Verfahrensschritt des Verbindens 500 erfolgt das Verbinden des Reinigunselements 3 mit dem Griffelement 2. Hierbei wird der Aufnahme- abschnitt 2.1 des Griffelements 2 gepresst. Alternativ oder zusätzlich wird Wärme in die in dem Aufnahmeabschnitt 2.1 angeordneten Abschnitte 5.1 des Filaments 5 eingebracht. Das Verbinden 500 kann so erfolgen, wie dies beispielsweise im Zusammenhang mit Fig. 5 und 6
erläutert worden ist.

Schließlich wird in einem dem Pressen nachfolgenden Verfahrensschritt des Vereinzelns 600 das Griffelement 2, insbesondere das Griffelement-Oberteil und das Griffelement-Unterteil aus dem jeweiligen Oberteilelement bzw. Unterteilelement herausgelöst. Das Herauslösen
erfolgt bevorzugt durch Stanzen.

Bei den vorstehend beschriebenen Ausführungsbeispielen des erfindungsgemäßen Verfahrens zur Herstellung einer Reinigungsvorrichtung 1 ist bevorzugt vorgesehen, dass das Reinigungselement 3 in einer Reinigungselement-Herstellungsmaschine hergestellt wird und unmittelbar nach der Herstellung mit dem Griffelement 2 verbunden wird, sodass auf ein Sammeln hergestellter Reinigungselemente 3 und ein nachfolgendes Vereinzeln der gesammelten Reinigungselemente 3 verzichtet werden kann.

Die folgende Liste umfasst Beispiele für Ausführungsformen:
1. Verfahren zur Herstellung einer Reinigungsvorrichtung, insbesondere einer Interdental-Reinigungsvorrichtung (1), mit folgenden Verfahrensschritten:
   a. Ausbilden (100) eines Griffelements (2) aus einem Faserwerkstoff, insbesondere aus Papier oder Karton,
   b. Bereitstellen (300) eines Reinigungselements (3), das zumindest ein Filament (5) umfasst,
   c. Anordnen (400) zumindest eines Abschnitts (5.1) des zumindest einen Filaments (5) des Reinigungselements (3) in einem Aufnahmeabschnitt(2.1) des Griffelements (2),
   d. Verbinden des Reinigungselements (3) mit dem Griffelement (2) durch
      i. Pressen des Aufnahmeabschnitts (2.1) des Griffelements (2), insbesondere Pressen des Aufnahmeabschnitts (2.1) von mehreren Seiten gegen den in dem Aufnahmeabschnitt (2.1) angeordneten Abschnitt (5.1) des Filaments (5)
         und/oder
      ii. Einbringen von Wärme in den Aufnahmeabschnitt (2.1) und/oderden Abschnitt (5.1) des Filaments (5).
2. Verfahren nach Ausführungsform 1, wobei
   das Reinigungselement (3) ein Bürstenelement ist, das mehrere Filamente (5) umfasst,
   der Verfahrensschritt des Anordnens, das Anordnen (400) zumindest eines Abschnitts (5.1) zumindest einiger der Filamente (5) des Bürstenelements (3) in einem Aufnahmeabschnitt (2.1) des Griffelements (2) umfasst,
   der Verfahrensschritt des Verbindens des Bürstenelements (3) mit dem Griffelement (2) umfasst:
      iii. Pressen des Aufnahmeabschnitts (2.1) des Griffelements (2), insbesondere Pressen des Aufnahmeabschnitts (2.1) von mehreren Seiten gegen die in dem Aufnahmeabschnitt (2.1) angeordneten Filamente (5.1) bzw. Abschnitte (5.1) der Filamente (5) und/oder
      iv. Einbringen von Wärme in den Aufnahmeabschnitt (2.1) und/oder die in dem Aufnahmeabschnitt (2.1) angeordneten Filamente (5.1)bzw. Abschnitte (5.1) der Filamente (5).
3. Verfahren nach Ausführungsform 1, wobei
   der Verfahrensschritt des Anordnens das Anordnen zumindest zweier Abschnitte (5.1), insbesondere zweier Endabschnitte des Filaments (5), jeweils in einem von zwei Aufnahmeabschnitten (2.1) des Griffelements (2) umfasst und
   der Verfahrensschritt des Verbindens des Reinigungselements (3) mitdem Griffelement (2) umfasst:
      i. Pressen der Aufnahmeabschnitte (2.1) des Griffelements (2), insbesondere Pressen der Aufnahmeabschnitte (2.1) von mehreren Seiten gegen den in dem Aufnahmeabschnitt (2.1) angeordneten Abschnitt (5.1) des Filaments (5)
         und/oder
      ii. Einbringen von Wärme in die Aufnahmeabschnitte (2.1) und/oder die Abschnitte (5.1) des Filaments (5).
4. Verfahren nach einer der vorhergehenden Ausführungsformen, wobei das eine oder die mehreren Filamente aus einem Thermoplast ausgebildet sind.
5. Verfahren nach einer der Ausführungsformen 1,2 oder 4, wobei das Bürstenelement Filamente mit einem höheren Schmelzpunkt und Filamente mit einem niedrigen Schmelzpunkt umfasst und die Filamente mit dem höheren Schmelzpunkt auf einer Seite des Bürstenelements angeordnet werden, die dem Griffelement, insbesondere dem Aufnahmeabschnitt des Griffelements, abgewandt ist.
6. Verfahren nach einer der vorhergehenden Ausführungsformen, wobei die Wärme durch ein Heizelement eingebracht wird, welches in Kontakt mit dem Aufnahmeabschnitt gebracht wird, insbesondere eine Heißsiegelbacke oder eine Walze.
7. Verfahren nach einer der vorhergehenden Ausführungsformen, wobei die Wärme durch erwärmte Luft eingebracht wird.
8. Verfahren nach einer der vorhergehenden Ausführungsformen, wobei die Wärme durch Ultraschall eingebracht wird.
9. Verfahren nach einer der vorhergehenden Ausführungsformen, wobei die Wärme durch Erwärmen eines Endbereichs des Griffelements eingebracht wird, welcher dem Aufnahmeabschnittgegenüberliegt.
10. Verfahren nach einer der vorhergehenden Ausführungsformen, wobei der Faserwerkstoff, insbesondere vor dem Ausbilden des Griffelements (2), mit einer heißsiegelbaren Beschichtung versehen wird.
11. Verfahren nach einer der Ausführungsformen 1, 2 oder 4 bis 10, wobei das Bürstenelement eine Basis aufweist, an welcher die Filamente angeordnet sind, insbesondere eine Basis aus einem Metall und/oder einem Kunststoff.
12. Verfahren nach Ausführungsform 11, wobei die Wärme durch Erwärmen der Basis eingebracht wird.
13. Verfahren nach Ausführungsform 12, wobei die nicht in dem Aufnahmeabschnitt (2.1) angeordneten Filamente (5) bzw.Abschnitte (5.2) der Filamente (5) des Bürstenelements (3) gekühlt werden, insbesondere durch Luft gekühlt werden.
14. Verfahren nach einer der vorhergehenden Ausführungsformen, wobei beim Pressen des Aufnahmeabschnitts (2.1) des Griffelements (2) eine Prägung in die Oberfläche des Griffelements (2) eingebracht wird.
15. Verfahren nach einer der vorhergehenden Ausführungsformen, wobei das Griffelement (2) stabförmig ausgebildet ist und der Aufnahmeabschnitt (2.1) des Griffelements (2) an einem stirnseitigen Ende des stabförmigen Griffelements (2) angeordnet ist.
16. Verfahren nach einer der vorhergehenden Ausführungsformen, wobei der Aufnahmeabschnitt (2.1) eine Stirnseite des Griffelements (2) umfasst und das Pressen und/oder Einbringen der Wärme in einem Bereich des Aufnahmeabschnitts (2.1) des Griffelements (2) erfolgt, der einen Abstand von der Stirnseite des Griffelements (2) aufweist, insbesondere wobei der Abstand mindestens das 0,1-fache einer Länge des Reinigungselements, insbesondere Bürstenelements beträgt, bevorzugt mindestens das 0,25-fache einer Länge des Reinigungselements, insbesondere Bürstenelements.
17. Verfahren nach einer der vorhergehenden Ausführungsformen, wobei das Griffelement (2), insbesondere der Aufnahmeabschnitt (2.1) des Griffelements (2), angefeuchtet wird, insbesondere aufgeweicht wird.
18. Verfahren nach einer der vorhergehenden Ausführungsformen, wobei der Faserwerkstoff, insbesondere das Papier, zum Ausbilden des Griffelements (2) gerollt wird.
19. Verfahren nach einer der Ausführungsformen 1 bis 17, wobei das Griffelement (2) als Faserformteil durch Faserguss aus dem Faserwerkstoff ausgebildet wird.
20. Verfahren nach einer der vorhergehenden Ausführungsformen, wobei mindestens ein Filament (5.2), das in dem Aufnahmeabschnitt angeordnetist, derart angeordnet, insbesondere umgebogen, wird, dass es aus dem Aufnahmeabschnitt heraussteht, insbesondere an einer Stirnseite des Griffelements (2).
21. Reinigungsvorrichtung, insbesondere Interdental-Reinigungsvorrichtung (1), mit einem Griffelement (2) und einem Reinigungselement (3), das zumindest ein Filament (5) umfasst, wobei das Griffelement (2) aus einem Faserwerkstoff, insbesondere aus Papier oder Karton, ausgebildet ist und das Reinigungselement (3) mit dem Griffelement (2) verbunden ist, wobei zumindest ein Abschnitt (5.1) des zumindest einen Filaments (5) in einem Aufnahmeabschnitt (2.1) des Griffelements (2) angeordnet und mit dem Aufnahmeabschnitt (2.1) verpresst und/oder verschmolzen ist.

### Bezugszeichenliste

- 1: Reinigungsvorrichtung
- 2: Griffelement
- 2.1: Aufnahmeabschnitt
- 2.1': gepresster Aufnahmeabschnitt
- 3: Reinigungselement
- 4: Basis
- 5: Filament(e)
- 5.1: Abschnitte des/der Filament(e) bzw. Filamente im Aufnahmeabschnitt
- 5.2: aus dem Aufnahmeabschnitt herausstehende Abschnitte der Filamente bzw. Filamente

- 90: Verfahrensschritt
- 100, 101, 102: Verfahrensschritt "Rollen"
- 200: Sackloch ausbilden
- 300: Verfahrensschritt "Bereitstellen eines Bürstenelements"
- 400, 401: Verfahrensschritt "Einbringen"
- 500: Verfahrensschritt "Pressen und/oder Wärme einbringen"
- 600: Verfahrensschritt "Vereinzeln"

## Patentansprüche

1. Verfahren zur Herstellung einer Reinigungsvorrichtung, insbesondere einer Interdental-Reinigungsvorrichtung (1), mit folgenden Verfahrensschritten:
a. Ausbilden (100) eines Griffelements (2) aus einem Faserwerkstoff,
b. Bereitstellen (300) eines Reinigungselements (3), das zumindest ein Filament (5) umfasst,
c. Herstellen eines Aufnahmeabschnitts (2.1) des Griffelements (2) durch Bohren oder Eindrücken eines Dorns zum Erzeugen eines Sacklochs,
d. Anordnen (400) zumindest eines Abschnitts (5.1) des zumindest einen Filaments (5) des Reinigungselements (3) in dem Aufnahmeabschnitt (2.1) des Griffelements (2), und
e. Verbinden des Reinigungselements (3) mit dem Griffelement (2).

2. Verfahren nach Anspruch 1, **dadurch gekennzeichnet, dass** das Griffelement (2) als Faserformteil durch Faserguss aus dem Faserwerkstoff ausgebildet wird.

3. Verfahren nach Anspruch 1 oder 2, weiter umfassend Einbringen einer Prägung in die Oberfläche des Griffelements (2), wobei die Prägung mindestens ein Rillen-muster und/oder ein Logo umfasst.

4. Verfahren nach einem der vorhergehenden Ansprüche, wobei das Griffelement (2) aus einem farbigen Faserwerkstoff ausgebildet wird.

5. Verfahren nach einem der vorhergehenden Ansprüche, wobei das Material des Griffelements (2) recycelt oder biologisch abgebaut werden kann.

6. Verfahren nach einem der vorhergehenden Ansprüche, wobei der Faserwekstoff mit einem Muster, einem Logo und/oder einer Kennzeichnung bedruckt ist.

7. Verfahren nach einem der vorhergehenden Ansprüche, wobei der Verfahrensschritt des Anordnens das Anordnen (400) lediglich Abschnitte (5.1) mehrerer oder aller Filamente (5) in dem Aufnahmeabschnitt (2.1) oder das Anordnen (400) einige der Filamente (5) vollständig in dem Aufnahmeabschnitt (2.1) umfasst.

8. Verfahren nach einem der vorhergehenden Ansprüche, wobei das Sackloch des Aufnahmeabschnitts (2.1) einen Durchmesser im Bereich von 0,3 mm bis 3 mm, besonders bevorzugt im Bereich von 0,5 mm bis 1 mm.

9. Verfahren nach einem der vorhergehenden Ansprüche, **dadurch gekennzeichnet, dass** das eine oder die mehreren Filamente aus einem Thermoplast ausgebildet sind.

10. Verfahren nach einem der vorhergehenden Ansprüche, **dadurch gekennzeichnet, dass** der Faserwerkstoff, insbesondere vor dem Ausbilden des Griffelements (2), mit einer heißsiegelbaren Beschichtung versehen wird.

11. Verfahren nach einem der vorhergehenden Ansprüche, **dadurch gekennzeichnet, dass** das Griffelement (2) stabförmig ausgebildet ist und der Aufnahmeabschnitt (2.1) des Griffelements (2) an einem stirnseitigen Ende des stabförmigen Griffelements (2) angeordnet ist.

12. Verfahren nach einem der vorhergehenden Ansprüche, **dadurch gekennzeichnet, dass** das Griffelement (2), insbesondere der Aufnahmeabschnitt (2.1) des Griffelements (2), angefeuchtet wird, insbesondere aufgeweicht wird.

13. Verfahren nach einem der vorhergehenden Ansprüche, **dadurch gekennzeichnet, dass** der Faserwerkstoff, insbesondere das Papier, zum Ausbilden des Griffelements (2) gerollt wird.

14. Verfahren nach einem der vorhergehenden Ansprüche, **dadurch gekennzeichnet, dass** mindestens ein Filament (5.2), das in dem Aufnahmeabschnitt (2.1) angeordnet ist, derart angeordnet, insbesondere umgebogen, wird, dass es aus dem Aufnahmeabschnitt (2.1) heraussteht, insbesondere an einer Stirnseite des Griffelements (2).

15. Reinigungsvorrichtung, insbesondere Interdental-Reinigungsvorrichtung (1), umfassend:
ein Griffelement (2), wobei das Griffelement (2) aus einem Faserwerkstoff ausgebildet ist;
ein Reinigungselement (3), das zumindest ein Filament (5) umfasst; und
einen Aufnahmeabschnitt (2.1) des Griffelements (2), wobei das Aufnahmeabschnitt (2.1) ein Sackloch umfasst, wobei das Sackloch durch Bohren oder Eindrücken eines Dorns erzeugt geworden ist;
wobei mindestens ein Abschnitt (5.1) des mindestens einen Filaments (5) des Reinigungselements (3) in dem Aufnahmeabschnitt (2.1) angeordnet ist;
wobei das Reinigungselement (3) mit dem Griffelement (2) verbunden ist.
